# EUROPÄISCHE PATENTSCHRIFT

(11) **EP 0 866 759 B1**
(45) Veröffentlichungstag und Bekanntmachung des Hinweises auf die Patenterteilung: **04.08.1999**
(21) Anmeldenummer: 96946058.3
(22) Anmeldetag: 10.12.1996
(51) Int. Cl.: B61F 5/02, B60G 11/56, F16F 13/00

(54) **FEDERVORRICHTUNG**
SPRING DEVICE
DISPOSITIF A RESSORTS

(30) Priorität: 12.12.1995 DE 19546315
(43) Veröffentlichungstag der Anmeldung: 30.09.1998
(73) Patentinhaber: PHOENIX AKTIENGESELLSCHAFT, 21079 Hamburg (DE)
(72) Erfinder: GIESELER, Eckhard, D-57258 Freudenberg (DE); LAMBRECHT, Dirk, D-21129 Hamburg (DE)
(86) Internationale Anmeldenummer: DE9602360
(87) Internationale Veröffentlichungsnummer: WO9721576

(56) Entgegenhaltungen:
- DE-A- 1 605 051
- DE-A- 3 412 547
- FR-A- 1 576 829

## Beschreibung

Die Erfindung betrifft eine Federvorrichtung, insbesondere für den Schienenfahrzeugbereich, insbesondere wiederum zur Abfederung zwischen Drehgestell und Wagenkasten, wobei sich die Federvorrichtung zwischen einer Tragplatte und einem Unterbau befindet und aus zwei parallel geschalteten Federsystemen I und II besteht, wobei wiederum jedes Federsystem drei parallel zueinander angeordnete Federn, nämlich eine erste Feder A, eine zweite Feder B und eine dritte Feder C, umfaßt. Eine derartige Federvorrichtung ist aus der Druckschrift DE-A-34 12 547 bekannt.

Um die Entgleisungssicherheit bei einer Federvorrichtung gemäß DE-A-34 12 547 sowie bei anderen bekannten Federvorrichtungen (DE-B-11 90 811, DE-B-20 60 960, DE-B-24 40 069, DE-C-44 04 878, FR-A-812 045, JP-A-4/29631) auch für den Notbetrieb zu gewährleisten, werden bislang meist aufwendige zusätzliche Gelenkkonstruktionen im Wagenkasten erforderlich; bzw. es wird ein größerer Einbauraum für die Federvorrichtung notwendig. Die größten Probleme entstehen hierbei, wenn es eine relativ lange und verwindungssteife Wagenkastenröhre zu berücksichtigen gilt und dafür bei Notbetrieb der Nachweis der Entgleisungssicherheit zu erbringen ist.

Ausgehend von diesem Stand der Technik besteht nun die Aufgabe darin, bei Vermeidung aufwendiger und kostenintensiver Wagenkastenkonstruktionen die Entgleisungssicherheit bei Notbetrieb, d.h. bei Ausfall der bisher bekannten Federvorrichtungen, in der Verwindungsrampe zu verbessern.

Gelöst wird diese Aufgabe durch eine Federvorrichtung, gemäß Kennzeichen des Patentanspruches 1, und zwar unter Verwendung der im folgenden näher beschreibenen Federn A, B und C.

### Erste Feder A

Die Feder A ist eine Luftfeder oder hydropneumatische Feder, die einen Balg aus elastomerem Werkstoff (d.h. Gummi oder gummiähnlichem Kunststoff) umfaßt, der unter Verwendung von Befestigungsmitteln die Tragplatte mit dem oberen Teil eines Abrollkolbens verbindet.

Die Federn A der beiden parallel geschalteten Federsysteme I und II sind mittels eines Überströmkanals druckausgleichend miteinander verbunden, wobei der Überströmkanal insbesondere innerhalb der Tragplatte verläuft und dabei mit einem Ventil verbunden ist, das zwischen den beiden Federsystemen angeordnet ist.

Vorteilhafterweise ist die Tragplatte innerhalb der Feder A mit einem Anschlag versehen, und zwar mit integrierter Einströmöffnung.

### Zweite Feder B

Die Feder B, insbesondere in Form einer Spiralfeder aus Stahl oder elastomerem Werkstoff, ist außerhalb der Feder A angeordnet und erstreckt sich dabei von der Tragplatte bis hin zum Unterbau.

### Dritte Feder C

Die Feder C, ebenfalls insbesondere in Form einer Spiralfeder aus Stahl oder elastomerem Werkstoff, ist innerhalb des Abrollkolbens der Feder A eingebaut, und zwar unter gleichzeitiger Verwendung eines Druckstempels zur Kraftübertragung, der mit seinem unteren Teil, insbesondere in Verbindung mit einer flanschartigen Verbreiterung, auf der Feder C aufsitzt und mit seinem oberen Teil, der mit einem stirnförmigen Anschlag versehen ist, in den Innenraum der Feder A hineinragt, wobei der Druckstempel innerhalb des Kontaktbereiches zum Abrollkolben eine senkrechte Gleitfläche sowie einen stufenförmigen Anschlag besitzt, der in Verbindung mit der Feder C eine Vorspannung erzeugt.

Der stirnförmige Anschlag des Druckstempels ist vorteilhafterweise plattenförmig ausgebildet, insbesondere in Verbindung mit einer Kunststoffschicht. Dieser Anschlag ist dabei dem Anschlag der Tragplatte direkt gegenüberliegend angebracht.

Zweckmäßigerweise ist der Unterbau der Federvorrichtung mit zusätzlichen Federn, insbesondere in Form von Elastomer-Federn oder Metall-Elastomer-Schichtfedern ausgestattet, wobei der Unterbau vorteilhafterweise aus einer Oberplatte und einer Unterplatte besteht, zwischen denen die Federn angeordnet sind.

Die beiden parallel geschalteten Federsysteme I und II sind zweckmäßigerweise höhengleich angeordnet.

Die Erfindung wird nun anhand eines Ausführungsbeispiels unter Bezugnahme auf eine schematische Zeichnung erläutert, und zwar in Verbindung mit folgender Bezugsziffernliste:
- I: Federsystem
- II: Federsystem
- A: Luftfeder oder hydropneumatische Feder
- B: Spiralfeder aus Stahl oder elastomerem Werkstoff
- 1: Tragplatte
- 2: Balg aus elastomerem Werkstoff
- 3: Abrollkolben
- 4: Unterbau
- 4': Oberplatte des Unterbaus
- 4'': Unterplatte des Unterbaus
- 5: Überströmkanal
- 6: Druckstempel
- 6': unterer Teil des Druckstempels
- 6'': oberer Teil des Druckstempels
- 7: stirnförmiger Anschlag
- 7': Kunststoffschicht
- 8: Gleitfläche
- 9: stufenförmiger Anschlag
- 10: Ventil
- 11: Einströmöffnung
- 12: Anschlag
- 13: flanschförmige Verbreiterung des Druckstempels
- 14: Zusatzfedern
- 15: Durchlaßöffnung

Die beiden parallel geschalteten und höhengleichen Federsysteme **I** und **II** unterhalb der Tragplatte **1** bestehen jeweils aus einer Feder **A** und **B**, die ebenfalls parallel zueinander angeordnet sind. Die Feder **A** ist dabei eine Luftfeder oder hydropneumatische Feder, umfassend einen Balg **2** aus elastomerem Werkstoff und einen Abrollkolben **3**, während die Feder **B** eine Spiralfeder aus Stahl oder elastomerem Werkstoff ist, wobei sich die Feder **A** innerhalb der Feder **B** befindet. Ein Überströmkanal **5** mit Ventil **10** verbindet dabei druckausgleichend die beiden Federn **A**, wobei der Überströmkanal innerhalb der Tragplatte **1** verläuft.

Die Feder **A** übernimmt nun die automatische Regelung der Fußbodenhöhe eines Fahrzeuges und hält diese Höhe bei allen Belastungszuständen konstant. Die Feder **B** ist Last-Weg-abhängig. Die Lastdifferenz zwischen leerem und beladenem Fahrzeug wird im Normalfall nur von der Feder **A** übernommen. Dabei bleibt der Lastanteil von Feder **B** in jedem Belastungszustand gleich.

Je nach Gestaltung von Feder **A** und **B** ist es möglich, daß die Tauchfrequenz zwischen Leer- und Voll-Last weitestgehend konstant niedrig bleibt

Bei defekter Feder **A** (z.B. durch Druckverlust) übernimmt nun die Feder **B** die Notlaufeigenschaften. Dabei übernimmt bei Leerlast die Feder **B** den Lastanteil von Feder **A**.

Ferner sind die Federsysteme **I** und **II** mit einer zusätzlichen, ebenfalls parallel zu den Federn **A** und **B** geschalteten Feder **C** ausgestattet, und zwar unter gleichzeitiger Verwendung eines Druckstempels **6** zur Kraftübertragung. Der untere Teil **6'** des Druckstempels ist mit einer flanschförmigen Verbreiterung **13** versehen, die auf der Feder **C** aufsitzt. Der obere Teil **6''** des Druckstempels ist mit einem stirnförmigen Anschlag **7** versehen, der plattenförmig ausgebildet und mit einer zusätzlichen Kunststoffschicht **7'** ausgestattet ist, und ragt dabei in den Innenraum der Feder **A** hinein. Der Anschlag **7** des Druckstempels **6** ist dabei direkt gegenüber dem Anschlag **12** der Tragplatte **1** angeordnet, wobei der Anschlag **12** mit einer integrierten Einströmöffnung **11** versehen ist. Ferner besitzt der Druckstempel **6** innerhalb des Kontaktbereiches zum Abrollkolben **3** eine senkrechte Gleitfläche **8** sowie einen stufenförmigen Anschlag **9**, der in Verbindung mit der Feder **C** eine Vorspannung erzeugt.

Bei Ausfall der Feder **A** (Notbetrieb) unterstützt nun die Feder **C** insbesondere bei Voll-Last die Feder **B** und sorgt für eine progressive Federkennlinie. Die Feder **C** kommt im Normalbetrieb (bei intakter Feder **A**) - von Ausnahmefällen einmal abgesehen - nicht zum Einsatz.

Der Unterbau **4** ist vorteilhafterweise mit zusätzlichen Federn **14**, beispielsweise in Form von Gummi-Federn oder Metall-Gummi-Schichtfedern, ausgestattet Der Unterbau besteht hier aus einer Oberplatte **4'** und einer Unterplatte **4''**, zwischen denen nun die Federn **14** angeordnet sind.

Bei Verwendung einer Luftfeder ist es ferner von Vorteil, wenn innerhalb des oberen Teils **6''** des Druckstempels **6**, insbesondere in seinem Seitenbereich, wenigstens eine Durchlaßöffnung **15** vorhanden ist, die den Innenraum der Feder **A** mit dem Innenraum des Abrollkolbens **3** verbindet.

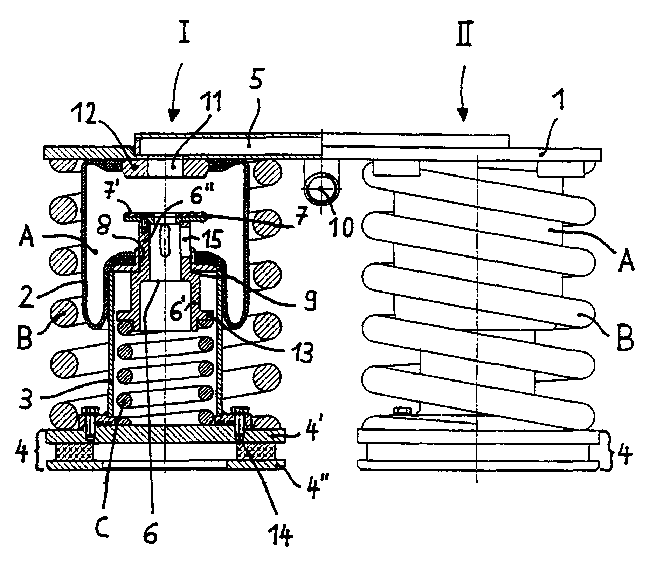

## Patentansprüche

1. Federvorrichtung, insbesondere für den Schienenfahrzeugbereich, insbesondere wiederum zur Abfederung zwischen Drehgestell und Wagenkasten, wobei sich die Federvorrichtung zwischen einer Tragplatte (1) und einem Unterbau (4) befindet und aus zwei parallel geschalteten Federsystemen (I, II) besteht, wobei wiederum jedes Federsystem drei parallel zueinander angeordnete Federn, nämlich eine erste Feder (A), eine zweite Feder (B) und eine dritte Feder (C), umfaßt, dadurch gekennzeichnet, daß
- die erste Feder (A) eine Luftfeder oder hydropneumatische Feder ist, umfassend einen Balg (2) aus elastomerem Werkstoff, der unter Verwendung von Befestigungsmitteln die Tragplatte (1) mit dem oberen Teil eines Abrollkolbens (3) verbindet, wobei die ersten Federn (A) der Federsysteme (I, II) mittels eines Überströmkanals (5) druckausgleichend miteinander verbunden sind;
- die zweite Feder (B) außerhalb der ersten Feder (A) angebracht ist und sich dabei von der Tragplatte (1) bis hin zum Unterbau (4) erstreckt; sowie
- die dritte Feder (C) innerhalb des Abrollkolbens (3) der ersten Feder (A) eingebaut ist, und zwar unter gleichzeitiger Verwendung eines Druckstempels (6) zur Kraftübertragung, der mit seinem unteren Teil (6') auf der dritten Feder (C) aufsitzt und mit seinem oberen Teil (6''), der mit einem stirnförmigen Anschlag (7) versehen ist, in den Innenraum der ersten Feder (A) hineinragt, wobei der Druckstempel innerhalb des Kontaktbereiches zum Abrollkolben (3) eine senkrechte Gleitfläche (8) sowie einen stufenförmigen Anschlag (9) besitzt, der in Verbindung mit der dritten Feder (C) eine Vorspannung erzeugt.

2. Federvorrichtung nach Anspruch 1, dadurch gekennzeichnet, daß der Überströmkanal (5) innerhalb der Tragplatte (1) verläuft.

3. Federvorrichtung nach Anspruch 1 oder 2, dadurch gekennzeichnet, daß der Überströmkanal (5) mit einem Ventil (10) verbunden ist, das zwischen den beiden Federsystemen (I, II) angeordnet ist.

4. Federvorrichtung nach einem der Ansprüche 1 bis 3, dadurch gekennzeichnet, daß die Einströmöffnung (11) der ersten Feder (A) direkt über dem Druckstempel (6), und zwar in seiner Achsrichtung angeordnet ist.

5. Federvorrichtung nach einem der Ansprüche 1 bis 4, dadurch gekennzeichnet, daß der stirnförmige Anschlag (7) des Druckstempels (6) plattenförmig ausgebildet ist.

6. Federvorrichtung nach einem der Ansprüche 1 bis 5, dadurch gekennzeichnet, daß der stirnförmige Anschlag (7) des Druckstempels (6) mit einer Kunststoffschicht (7') versehen ist.

7. Federvorrichtung nach einem der Ansprüche 1 bis 6, insbesondere in Verbindung mit Anspruch 4, dadurch gekennzeichnet daß die Tragplatte (1) innerhalb der ersten Feder A mit einem Anschlag (12) versehen ist, der dem stirnförmigen Anschlag (7) des Druckstempels (6) direkt gegenüberliegend angeordnet ist.

8. Federvorrichtung nach einem der Ansprüche 1 bis 7, dadurch gekennzeichnet, daß der Druckstempel (6) innerhalb seines unteren Teils (6') eine flanschartige Verbreiterung (13) besitzt, die auf der dritten Feder (C) aufsitzt.

9. Federvorrichtung nach einem der Ansprüche 1 bis 8, dadurch gekennzeichnet, daß die zweite und dritte Feder (B, C) Spiralfedern aus Stahl oder elastomerem Werkstoff sind.

10. Federvorrichtung nach einem der Ansprüche 1 bis 9, dadurch gekennzeichnet, daß der Unterbau (4) mit zusätzlichen Federn (14), insbesondere in Form von Elastomer-Federn oder Metall-Elastomer-Schichtfedern, ausgestattet ist, wobei der Unterbau vorteilhafterweise aus einer Oberplatte (4') und einer Unterplatte (4'') besteht, zwischen denen die Federn (14) angeordnet sind.

11. Federvorrichtung nach einem der Ansprüche 1 bis 10, dadurch gekennzeichnet, daß die parallel geschalteten Federsysteme (I, II) höhengleich angeordnet sind.

12. Federvorrichtung nach einem der Ansprüche 1 bis 11, dadurch gekennzeichnet daß bei Verwendung einer Luftfeder innerhalb des oberen Teils (6'') des Druckstempels (6), insbesondere in seinem Seitenbereich, wenigstens eine Durchlaßöffnung (15) vorhanden ist, die den Innenraum der ersten Feder (A) mit dem Innenraum des Abrollkolbens (3) verbindet.

## Claims

1. Spring device, in particular for the rail vehicle sector, in particular again for springing between bogie and vehicle body, in which the spring device is located between a supporting plate (1) and a substructure (4) and consists of two parallel spring systems (I, II), and in which again each spring system comprises three springs disposed parallel with one another, characterised in that
- the first spring (A) is an air spring or hydropneumatic spring comprising a bellows (2) made of elastomer material which, using fastening means, connects the supporting plate (1) to the upper part of a spring support piston (3), the first springs (A) of the spring systems (I, II) being connected to one another in a pressure equalising manner by means of an overflow duct (5);
- the second spring (B) is fitted outside the first spring (A) and extends from the supporting plate (1) to the substructure (4), and
- the third spring (C) is incorporated inside the spring support piston (3) of the first spring (A), while simultaneously using a plunger (6) for transmission of force, which plunger is seated with its lower part (6') on the third spring (C) and projects with its upper part (6''), which is provided with an end stop (7), into the interior of the first spring (A), the plunger having within the area of contact with the spring support piston (3) a vertical sliding face (8) and a stop (9) in the form of a step which in combination with the third spring (C) produces a preload.

2. Spring device according to claim 1, characterised in that the overflow duct (5) runs inside the supporting plate (1).

3. Spring device according to claim 1 or 2, characterised in that the overflow duct (5) is connected with a valve (10) which is disposed between the two spring systems (I, II).

4. Spring device according to one of claims 1 to 3, characterised in that the inlet opening (11) of the first spring (A) is disposed directly over the plunger (6), in its axial direction.

5. Spring device according to one of claims 1 to 4, characterised in that the end stop (7) of the plunger (6) is embodied in the form of a plate.

6. Spring device according to one of claims 1 to 5, characterised in that the end stop (7) of the plunger (6) is provided with a layer (7') of plastic.

7. Spring device according to one of claims 1 to 6, in particular in conjunction with claim 4, characterised in that the supporting plate (1) inside the first spring (A) is provided with a stop (12) which is disposed directly opposite the end stop (7) of the plunger (6).

8. Spring device according to one of claims 1 to 7, characterised in that inside its lower part (6') the plunger (6) has a flange-like widening (13) which is seated on the third spring (C).

9. Spring device according to one of claims 1 to 8, characterised in that the second and third springs (B, C) are spiral springs made of steel or elastomer material.

10. Spring device according to one of claims 1 to 9, characterised in that the substructure (4) is equipped with additional springs (14), in particular in the form of elastomer springs or metal-elastomer laminar springs, the substructure advantageously consisting of an upper plate (4') and a lower plate (4'') between which the springs (14) are disposed.

11. Spring device according to one of claims 1 to 10, characterised in that the parallel spring systems (I, II) are disposed to be the same height.

12. Spring device according to one of claims 1 to 11, characterised in that when an air spring is used, at least one communicating port (15) is present inside the upper part (6'') of the plunger (6), in particular in its side area, which port connects the interior of the first spring (A) to the interior of the spring support piston (3).

## Revendications

1. Dispositif à ressorts, notamment dans le domaine des véhicules de chemin de fer, servant notamment pour réaliser une suspension entre le bogie et la caisse de la voiture, le dispositif à ressorts étant disposé entre une plaque de support (1) et un châssis (4) et étant constitué de deux systèmes de ressorts (I, II) montés en parallèle, et dans lequel chaque système de ressorts comporte trois ressorts disposés réciproquement en parallèle, à savoir un premier ressort (A), un second ressort (B) et un troisième ressort (C), caractérisé en ce que
- le premier ressort (A) est un ressort pneumatique ou un ressort hydropneumatique, comprenant un soufflet (2) formé d'un matériau élastomère, qui, moyennant l'utilisation de moyens de fixation, relie la plaque de support (1) à la partie supérieure d'un piston dérouleur (3), les premiers ressorts (A) des systèmes de ressorts (I, II) étant reliés entre eux, d'une manière réalisant une compensation de pression, à l'aide d'une conduite de trop-plein (5) ;
- le second ressort (a) est disposé à l'extérieur du premier ressort (A) et s'étend depuis la plaque de support (1) jusqu'au châssis (4) ; et
- le troisième ressort (c) est monté à l'intérieur du piston dérouleur (3) du premier ressort (A), et ce moyennant l'utilisation simultanée d'un poussoir de compression (6) pour la transmission de force, qui prend appui par sa partie inférieure (6') sur le troisième ressort (C) et pénètre dans l'espace intérieur du premier ressort (A) par sa partie (6''), qui est pourvue d'une butée frontale (7), le poussoir de compression possédant, à l'intérieur de la zone de contact avec le piston dérouleur (3), une surface de glissement verticale (8) ainsi qu'une butée (9) en forme d'épaulement, qui produit une précontrainte en liaison avec le troisième ressort (C).

2. Dispositif à ressorts selon la revendication 1, caractérisé en ce que le conduit de trop-plein (5) s'étend à l'intérieur de la plaque de support (1).

3. Dispositif à ressorts selon la revendication 1 ou 2, caractérisé en ce que le conduit de trop-plein (5) est relié à une soupape (10) qui est disposée entre les deux systèmes de ressorts (I, II).

4. Dispositif à ressorts selon l'une des revendications 1 à 3, caractérisé en ce que l'ouverture d'introduction (11) du premier ressort (1) est disposée directement au-dessus du poussoir de compression (6), et ce dans sa direction axiale.

5. Dispositif à ressorts selon l'une des revendications 1 à 4, caractérisé en ce que la butée frontale (7) du poussoir de compression (6) est réalisée en forme de plaque.

6. Dispositif à ressorts selon l'une des revendications 1 à 5, caractérisé en ce que la butée frontale (7) du poussoir de compression (6) comporte une couche de matière plastique (7').

7. Dispositif à ressorts selon l'une des revendications 1 à 6, notamment en liaison avec la revendication 4, caractérisé en ce que la plaque de support (1) comporte, à l'intérieur du premier ressort (A), une butée (12), qui est disposée directement en vis-à-vis de la butée frontale (7) du poussoir de compression (6).

8. Dispositif à ressorts selon l'une des revendications 1 à 7, caractérisé en ce que le poussoir de compression (6) possède, à l'intérieur de sa partie inférieure (6'), un élargissement en forme de bride (13), qui prend appui sur le troisième ressort (C).

9. Dispositif à ressorts selon l'une des revendications 1 à 8, caractérisé en ce que les second et troisième ressorts (B, C) sont des ressorts hélicoïdaux en acier ou en un matériau élastomère.

10. Dispositif à ressorts selon l'une des revendications 1 à 9, caractérisé en ce que le châssis (4) est équipé de ressorts supplémentaires (14), notamment sous la forme de ressorts élastomères ou de ressorts à couches métal-élastomère, le châssis étant constitué de préférence par une plaque supérieure (4') et une plaque inférieure (4''), entre lesquelles sont disposés les ressorts (14).

11. Dispositif à ressorts selon l'une des revendications 1 à 10, caractérisé en ce que les systèmes de ressorts (I, II) montés en parallèle sont disposés à un même niveau en hauteur.

12. Dispositif à ressorts selon l'une des revendications 1 à 11, caractérisé en ce que dans le cas de l'utilisation d'un ressort pneumatique à l'intérieur de la partie supérieure (6'') du poussoir de compression (6), notamment dans sa partie latérale, il est prévu au moins une ouverture de passage (15), qui relie l'espace intérieur du premier ressort (A) à l'espace intérieur du piston de déroulement (3).
